# EUROPÄISCHE PATENTSCHRIFT

(11) **EP 0 965 005 B1**
(45) Veröffentlichungstag und Bekanntmachung des Hinweises auf die Patenterteilung: **02.10.2002**
(21) Anmeldenummer: 98916825.7
(22) Anmeldetag: 03.03.1998
(51) Int. Cl.: F16F 7/12

(54) **DEFORMATIONSELEMENT**
DEFORMATION ELEMENT
ELEMENT DE DEFORMATION

(30) Priorität: 04.03.1997 DE 29703843 U
(43) Veröffentlichungstag der Anmeldung: 22.12.1999
(73) Patentinhaber: Magna IHV Gesellschaft für Innenhochdruckverfahren MBH, 73441 Bopfingen (DE)
(72) Erfinder: KLAAS, Friedrich, D-73432 Aalen (DE); STÜTZEL, Peter, D-73430 Aalen (DE)
(74) Vertreter: Kovac, Werner, Dipl.-Ing.
(86) Internationale Anmeldenummer: DE9800611
(87) Internationale Veröffentlichungsnummer: WO98039106

(56) Entgegenhaltungen:
- EP-A- 0 467 340
- EP-A- 0 793 035
- EP-A- 0 811 544
- DE-A- 4 240 237
- US-A- 4 531 619
- US-A- 4 684 151
- US-A- 5 118 160

## Beschreibung

Die Erfindung betrifft ein Deformationselement zur kontrollierten Dissipation von Energie, die mit einer Komponente in Richtung der Deformationselementlängsachse auftrifft.

Aus der EP-A-467 340 ist ein Deformationselement zur kontrollierten Dissipation von Energie zwischen Stoßfänger und Längsträger eines Fahrzeuges durch inelastische Verformung in einem vorgefertigten Deformationsbereich bekanntgeworden, das aus zwei in ihrer Längsrichtung ineinander schiebbaren Teilen besteht. Diese entspricht dem Oberbegriff des 1. Anspruches. Es kann Kräfte, die nicht in seiner Längsrichtung wirken, nicht aufnehmen.

Diese bekannten Deformationselemente waren mehrteilig aufgebaut und erforderten einen hohen Herstellungsaufwand, der komplizierte Teile schaffte. Dies führte zu unerwünscht hohen Gewichten dieser Teile ― insbesondere, wenn eine erhöhte Knickfestigkeit bzw. Belastbarkeit erwünscht war.

Es ist daher Aufgabe der Erfindung, einfachere und leichtere Deformationselemente zu schaffen.

Die Aufgabe wird erfindungsgemäß durch die Merkmale des Anspruchs 1 gelöst.

Bei der Erfindung wird Aufprallenergie über einen längeren Zeitraum in Verformungsenergie umgewandelt, wodurch die negative Beschleunigung des Teils verzögert wird und dadurch bspw. Insassen geschützt werden können. Ferner wird dadurch eine Verformung an bestimmten, vorbestimmten Bereichen ― bspw. außerhalb einer Fahrgastzelle, dem Kraftstofftank oder dem Motor ― ermöglicht, so daß diese sensiblen Bereiche dadurch gesichert werden können.

Es kann bevorzugt sein, daß die mindestens eine Vertiefung in einem wellenartig geformten Bereich vorliegt, wobei sich das Deformationselement bei einem Stoß in Deformationsrichtung in dem wellenartig geformten Bereich balgartig zusammenfalten kann.

Es kann aber auch ― bspw. für Längsträger mit Seitenaufprallschutz bei Kraftfahrzeugen ― mindestens eine longitudinal verlaufende Vertiefung vorgesehen sein. In diesem Fall ist dieser Träger dann durch Querkräfte definiert verformbar, während er gegenüber Längskräften widerstandsfähig ist.

Es kann auch mindestens eine transversale Vertiefung vorgesehen sein. Dies ist bspw. bei balgartig gefalteten Bereichen der Fall, bei denen sich beim Aufprall dieser balgartige Teil inelastisch zusammenfaltet.

Die mindestens eine Vertiefung kann auch stufenartig sein, so daß sich der obere Bereich der Stufe in den unteren Bereich bei Deformation einschiebt.

Es ist aber auch möglich, diese Vertiefungen als vorgeformte Bereiche, in denen sich das Deformationselement bei Aufprall mit einer Kraftkomponente entlang seiner Längsachse zusammenschiebt und dadurch noch während dieser Deformation gegenüber Ausknicken geschützt ist.

Bevorzugt bestehen erfindungsgemäße Deformationselemente aus einem kaltverformbaren Material, das bevorzugt eine Kaltverfestigung beim Umformen erfährt. Dafür bietet sich bspw. Stahl, wie ST 34 oder ST 52, ST 30, ST 40, Tiefziehstähle, Leichtmetall, Aluminium, Magnesium, Titan oder einer Legierung derselben oder aus faserverstärktem Material an. Es kann aber auch ― je nach Anwendungszweck ― aus geeigneten Kunststoffen hergestellt werden, die dem Fachmann geläufig sind. Bevorzugt wird das Deformationselement mittels des IHV-Verfahrens zumindest teilweise aus Metall hergestellt.

Dadurch, da nun ein einteiliges Deformationselement vorgesehen wird, kann dieses leichter als bekannte, aus mehreren Einzelkomponenten zusammengesetzte Teile bei gleichen oder besseren Belastungseigenschaften hergestellt werden und auch gegenüber bekannten Teilen eine Materialersparnis erzielt werden.

Dabei ist es sinnvoll, diese Teile mittels des Innenhochdruckumformverfahrens kalt zu verformen ― dadurch tritt bei der Kalt-Umformung im Innenhochdruckverfahren eine Kaltverfestigung auf, die besonders günstige Festigkeitseigenschaften des Elementes schafft. Außerdem sind kaltverformende Verfahren energetisch günstig und sparen Energie.

Durch dieses Innenhochdruckverfahren können völlig neuartige hohle Metallbauelemente, bei denen der Faserverlauf der Wände im wesentlichen parallel zur Außenkontur verläuft, hergestellt werden. Die hohlen Bauelemente können demzufolge aufgrund der hohen Wandfestigkeit durch den günstigen Faserverlauf parallel zu den Außenkonturen sowie die Kaltverfestigung in leichterer Form als bisher ausgebildet werden und ermöglicht dadurch eine erhebliche Gewichtsersparnis. Es ist auch möglich, für die Form laminierte Werkstoffe einzusetzen, sofern sich diese gemeinsam umformen lassen. Laminate können durch geeignete Materialauswahl leichter sein als Vollmaterialien und haben noch dazu den Vorteil, vibrationsdämpfend zu wirken oder auch an den Oberflächen entsprechend den Umgebungsbelastungen (Korrosion durch Säuren etc.) oder aus ästhetischen Gründen (Farbe) andere Schichten aufzuweisen, so daß ein derartiges Teil noch dazu günstige Schwingungsdämpfungseigenschaften besitzt.

Durch Nachführen von Material entlang der Rohrlängsachse während des Umformens, bspw. Durch bewegliche Formelemente, kann eine im wesentlichen gleichbleibende Wandstärke im Formteil ― auch beim Anformen von an Schlußelementen erzielt werden, so daß Schwächungen der Wandstärke durch die Anhörung von Erhebungen zumindest teilweise ausgeglichen werden können, so daß dies ohne Schwächung erfolgt.

Es ist vorteilhaft, daß beim Deformationselement die Länge der Vertiefung etwa gleich der Hälfte des Durchmessers des Deformationselements ist. Es kann sinnvoll sein, daß seine Wanddicke über das gesamte Deformationselement im wesentlichen konstant ist.

Es kann auch günstig sein, daß das hohle Deformationselement Rippen zur Versteifung aufweist. Dadurch kann eine weitere Materialersparnis erzielt werden. Falls die Verstärkungsrippen nur im Deformationsbereich ausgebildet sind, resultiert eine bessere Versteifung der Deformationsbereiche in der Längsrichtung der Verstärkungsrippen, während das Einschieben der Vertiefung im Fall eines Aufpralls noch erleichtert wird.

Das Deformationselement wird bevorzugt zumindest teilweise aus Stahl, wie ST 34 oder ST 52, Leichtmetall, Aluminium, Titan oder einer Legierung derselben oder aus faserverstärktem Material hergestellt.

Die Vertiefung kann symmetrisch ausgebildet sein, was dazu führt, daß selbst ein zur Längsachse des Deformationselementes versetzter Aufprall dazu führt, daß sich dieses gleichmäßig deformiert. Es hat sich gezeigt, daß es sinnvoll sein kann, wenn der Bereich des Teils, der besonders der Dissipation der Energie dient, im wesentlichen sechs- oder mehrseitig oder rund ist, wodurch eine ausreichende Stabilität gegen Ausknicken in eine Richtung gegeben ist. Die Vertiefung selbst verformt sich bei einem Aufprall, so daß die Energie definiert abgebaut werden kann.

Falls die mindestens eine Vertiefung unsymmetrisch ausgebildet ist, kann beim Aufprall eine bevorzugte Verkürzung des Deformationselements in einer Richtung bewirkt werden, was insbesondere dann wichtig ist, falls eine gerade Verkürzung des Deformationselements, das bspw. zum Eintreten des Deformationselements in irgendeinen unerwünschten Raum beim Aufprall führen könnte, unerwünscht ist. In einem solchen Fall kann dann eine unsymmetrische Ausgestaltung der Vertiefung ― d.h. bspw. an einem Teil des Deformationselementes eine kürzere Vertiefung ― vorgesehen sein, die eine bevorzugte Verkürzungsrichtung bewirkt.

Dadurch, daß an mindestens einem Ende des hohlen Deformationselements ein Anschlußprofil ausgeformt ist, läßt sich die Befestigung des Deformationselements bspw. am Längsträger eines Kraftfahrzeugs vereinfachen. Es können aber auch Verstärkungsteile, bspw. Bleche, an oder in den Deformationselementen vorgesehen sein, die in üblicher Weise an diesen befestigt sein können, um das Deformationsverhalten durch Verstärkung zu beeinflussen.

Es kann dabei günstig sein, daß das Außenformteil mehrere parallel zueinander verlaufende, aufeinanderliegende Schichten gleicher oder unterschiedlicher Materialien aufweist, deren Faserverlauf parallel zueinander ist.

Insbesondere zur Gewichtsersparnis kann das gesamte Bauteil im wesentlichen aus dem gleichen oder unterschiedlichen Leichtmetallen bestehen. Bspw. kann das Leichtmetall Aluminium oder eine Legierung desselben sein, womit auch eine günstige Korrosionsfestigkeit verbunden sein kann.

Ein vorteilhaftes Verfahren zur Herstellung von hohlen Formteilen besteht darin, daß eine hohle Außenform in an sich bekannter Weise durch Ziehen, Gießen Extrudieren, Innenhochdruckumformen hergestellt wird, die dann durch das an sich bekannte IHV-Verfahren fertig bearbeitet wird.

Es kann auch ein mehrschichtiges Metallrohr als Ausgangsteil, je nach den Anforderungen an das Material, gewählt werden. Dabei haben mehrschichtige Ausgestaltungen den Vorteil unterschiedlicher Beanspruchbarkeit der Oberflächen des Hohlteils und auch den Vorteil, Schwingungen aller Art schlechter zu leiten, was das Vibrationsverhalten des Hohlteils im Einsatz entscheidend verbessert.

Meist wird ein Deformationselement durch Einbringen oder teilweises Einbringen eines Rohrs in eine Form, Anlegen von Innenhochdruck und Herausnehmen des umgeformten Teiles hergestellt.

Dieses Teil kann dann selbstverständlich einer mechanischen Nach- oder Weiterbearbeitung, wie durch Hämmern, Tiefziehen, Hohnen, Laserhärten etc. unterworfen werden - bevorzugt durch Kaltumformungsverfahren, um die Kaltverfestigung des Gefüges beim IHV-Umformen nicht zu beeinträchtigen, bearbeitet werden. Es kann auch durch Laserverarbeitung, Hacken und Sägen weiterbearbeitet werden.

Es kann auch ein Vorformen des Rohrabschnitts vor dem Innenhochdruckumformen stattfinden, bspw. durch Biegen od. dgl. oder aber durch einen separaten Innenhochdruck-Vorumformschritt, mit dem eine Vorform hergestellt wird, die in mindestens einem weiteren IHV-Schritt weiterbearbeitet wird.

Das Verstärkungselement kann auch ein Schaumteil sein, bspw. aus Metallschaum, wie Aluminiumschaum oder aber ein Kunststoffschaum, der entweder als fertiger Schaumkörper eingebracht wird, der im Deformationselement befestigt wird, oder aber durch Herstellen einer mindestens teilweisen Schaumfüllung aus Metall- oder Kunststoffschaum im Deformationselement durch Aufschäumen des Schaumausgangsmaterials im Deformationselement erfolgen.

Dadurch, daß ein Innenhochdruckumformverfahren eingesetzt wird, ist es möglich, bereits in einem Formvorgang Erhebungen und Vertiefungen, Schraubengewinde, Öffnungen und dgl. am Außenhohlteil herzustellen. Dadurch ist es möglich, Nachbehandlungsschritte zu reduzieren.

Als Hohlteile können dabei unterschiedlichste Hohlprofile nämlich Rechteckprofile, Winkelprofile, Rohre, etc. eingesetzt werden.

Es wird somit ein Teil mit einem gegenüber bisherigen Teilen geringerem Gewicht bei gleicher Belastbarkeit oder auch höherer Belastbarkeit bei geringem Gewicht geschaffen, das noch dazu mit hoher Produktionsgenauigkeit bei verminderter Ausschußquote hergestellt werden kann.

Nachfolgend soll die Erfindung näher anhand der beigefügten Zeichnung erläutert werden, in der zeigt:
Fig. 1 eine Ausführungsform eines Deformationselements in perspektivischer Ansicht;
Fig. 2 das Deformationselement nach Fig. 1 im Längsschnitt;
Fig. 3 ein Deformationselement mit Längsrippen in perspektivischer Darstellung; und
Fig. 4 ein Deformationselement, das teilweise Längsrippen aufweist, in perspektivischer Darstellung;
Fig. 5 einen Längsschnitt durch eine durch Aufprall deformierte Deformationselementwand;
Fig. 6 ein Kraft/Energievernichtungsdiagramm des in der Fig. 4 dargestellten Deformationselements im Aufprallversuch;
Fig. 7a,b,c,d eine erfindungsgemäße Ausführungsform eines Deformationselements mit Deformation außerhalb der Längs- oder Querachse.

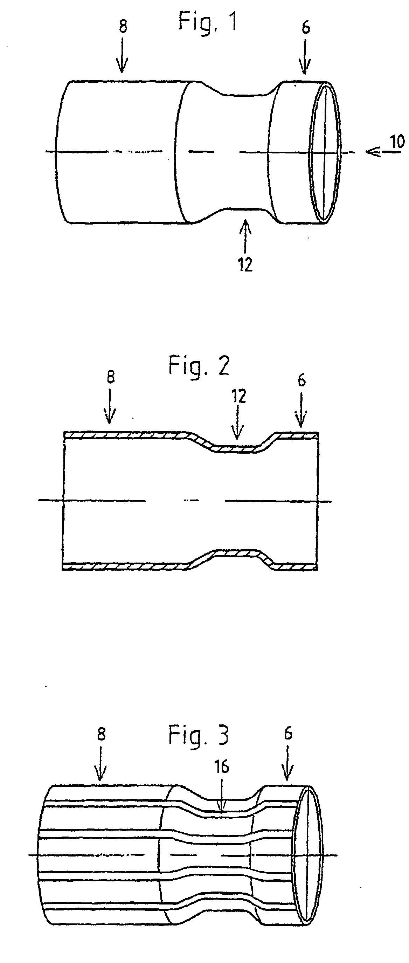

Die Figuren 1 bis 6 zeigen nicht die Erfindung, sondern vorteilhafte Ausgestaltungen derselben.

Wie aus Fig. 1 und 2, die jeweils das gleiche Bauelement ― einmal im Längsschnitt und einmal im Querschnitt ― zeigen, ersichtlich, besteht ein Deformationselement in einer bevorzugten Ausführungsform aus einem Stahlrohr. Das Stahlrohr wurde hier mittels des IHV-Verfahrens dreidimensional umgeformt. Dabei wird hier als Rohr jeder langgestreckte hohle Körper verstanden, der nicht runden Querschnitts sein muß.

Es ist zu beachten, daß in durch das Umformverfahren hergestellten Teile ― das Deformationselement ― gezielt eingeformte Rillen/Vertiefungen 12 an bestimmten Bereichen des Rohrs ausgebildet werden, - um das Element 10 später an bestimmten Stellen zu schwächen, so daß dort Soll-Deformationsstellen entstehen.

Dabei können die Hohlprofile des Bauelements unterschiedliche Durchmesser über ihre Längserstreckung besitzen, sowie unterschiedliche Querschnitte.

In Fig. 3 ist eine andere Anwendungsform eines Elements dargestellt. Es handelt sich hierbei um ein Bauelement, das Längsrippen 16 auf seinem Umfang aufweist. Da diese Rippen-Formelemente 16 in Längsrichtung versteifend wirken, kann dadurch weiterhin Gewicht bei gleichem mechanischem Verhalten beim Aufprall in Längsrichtung gespart werden.

Die Aufprallrichtung, für die das Deformationselement hauptsächlich ausgelegt ist (Richtung maximaler Energieaufnahme), ist in den Zeichnungen allgemein als yo oder aber als Fahrtrichtung bezeichnet.

Ein bevorzugtes Deformationselement, das für Pralldämpfer bei Personenkraftwagen eingesetzt werden kann, besteht aus einem ST 34 oder ST 52 oder einem Werkstoff mit ähnlichen Eigenschaften, besitzt eine Wanddicke von etwa 1,2 ― 3 mm und einen Durchmesser von 8 ― 12 cm, wobei die Länge der Vertiefung zwischen 5 und 15 cm beträgt.

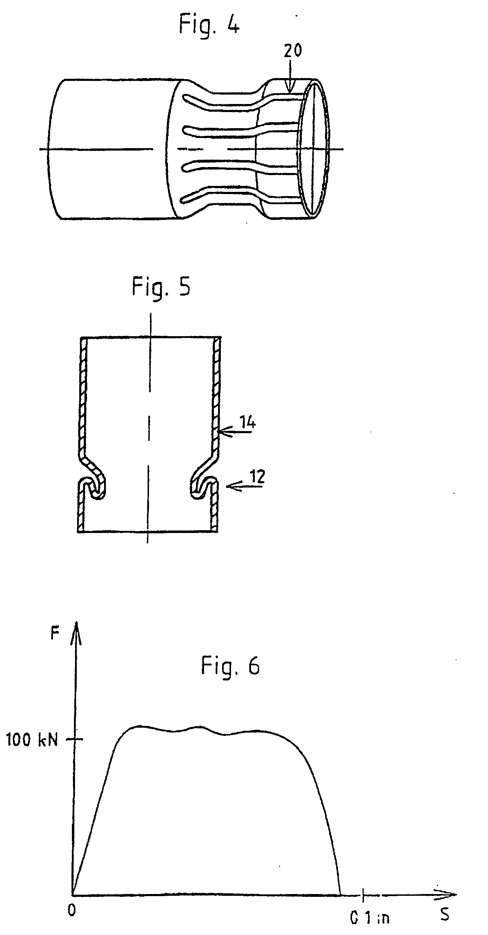

In Fig. 4 ist ein Bauelement dargestellt, das nur teilweise Längsrippen 18,20 in den Bereichen, die sich beim Aufprall verformen sollen, aufweist. Dadurch kann das Knickverhalten weiter gesteuert werden, so daß eine Deformation nur in der Deformationsvertiefung 12 auftritt.

In Fig. 5 ist ein Längsschnitt durch eine deformierte Wand eines Bauelementes dargestellt, die durch Aufprall entlang der Längsachse des Deformationselementes 10 produziert wurde. Es zeigt sich hier das erwünschte Einfalten im Bereich der Vertiefung 12, wobei die anderen Bereiche 6, 8 des Deformationselementes praktisch unverformt bleiben.

In Fig. 6 ist das Kraft/Energievernichtungsdiagramm einer Ausführungsform eines. Deformationselements dargestellt (Versuch der Fig. 5). Dabei zeigt sich, daß die auf das Fahrzeug ausgeübte Kraft durch Deformation des Deformationselements um eine vorherbestimmte Strecke s ohne besondere Kraftspitzen aufgenommen und dissipiert wird ― ein Insasse eines mit einem derartigen Deformationselement ausgerüsteten Fahrzeugs wird bei einem Aufprall daher zwar einer Kraft durch die negative Beschleunigung beim Aufprall ausgesetzt, diese wird aber relativ sehr viel langsamer aufgebaut und führt nicht zu den gefürchteten kurzzeitig sehr hohen Kräften, die zu schwerwiegendsten Verletzungen führen.

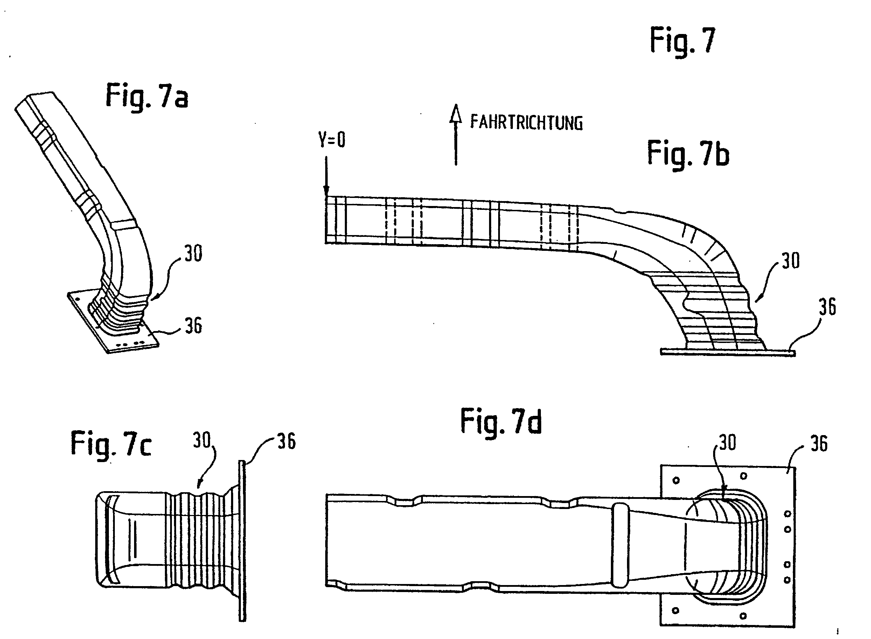

In Fig. 7a,b,c,d ist eine erfindungsgemäße Ausführungsform eines Deformationselements mit Deformation außerhalb der Längs- oder Querachsenrichtung gezeigt ― hier ist an einem etwa rechtwinklig gebogenen Trägerteil ein Deformationselements Bereich auf einem Winkelschenkel eingeformt. Bei einem Aufprall in yo-Richtung (entlang der Richtung dieses Winkelschenkels) faltet sich dieser Winkelschenkel zusammen, während der übrige Träger durch eingeformte Querprofile gegenüber Verformung in yo-Richtung verstärkt ist. Durch diese Ausgestaltung findet eine Verformung des gebogenen Deformationselements nur in einem Bereich des Teils statt, während die übrigen Bereiche durch entsprechende Ausgestaltung gegenüber Verformung verstärkt sind. Dieses Teil eignet sich bspw. Als Trägerteil für eine Stoßstange, die an der Trägerwelle angebracht werden kann.

Erfindungsgemäß ist es also möglich, durch die geometrische Ausgestaltung des Deformationselements das erwünschte Energievernichtungsverhalten durch erheblich leichtere und einfachere Deformationselemente, als bisher möglich, zu erzielen.

Dabei können die Hohlformteile sowohl aus einem einzigen Material, bspw. Stahl oder eine Leichtmetallegierung, bestehen, es ist aber je nach Einsatzverfahren auch möglich, Laminatmaterial, auch kunststoffbeschichtete oder überzogene Rohre umzuformen, je nach Anwendungszweck.

Durch das Vorsehen entsprechender Schichten ist es möglich, Korrosionsbeständigkeit oder auch Farbgebung zu erreichen, ohne daß weitere Arbeitsschutze notwendig sind.

Dadurch, daß auch Verstärkungsteile an und in den Deformationselementen befestigt werden können ― bspw. durch Schrauben, Nieten, Schweißen, Einstecken unter Paßsitz oder Formsitz etc. ist eine weitere Verstärkung gegenüber Verformung ― noch dazu an bevorzugten Bereichen ― möglich. Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung dienen sollen.

## Patentansprüche

1. Deformationselement zur kontrollierten Dissipation von Energie zwischen Stoßfänger und Längsträger eines Fahrzeuges durch inelastische Verformung in einem vorgefertigten Deformationsbereich, **dadurch gekennzeichnet, dass** das Element ein etwa rechtwinkelig gebogener rohrförmiger Hohlteil ist, auf dessem einen Winkelschenkel mindestens eine einen wellen- oder balgartigen Bereich bildende Vertiefung (12; 30) eingeformt ist, die bei einem Stoß auf den übrigen Träger mit einer Kraftkomponente in Richtung (y=0) senkrecht zur Vertiefung in Deformationsrichtung eine Sollknickstelle abgibt, an der sich dieser eine Winkelschenkel zusammenfalten kann, und dass das Deformationselement einteilig ist.

2. Deformationselement nach Anspruch 1, **dadurch gekennzeichnet, dass** die mindestens eine Vertiefung (12;30) stufenartig ist, sodass sich der obere Bereich der Stufe bei Deformation in den unteren Bereich einschiebt.

3. Deformationselement nach Anspruch 1, **dadurch gekennzeichnet, dass** es mindestens teilweise Verstärkungsrippen aufweist, die eine inelastische Verformung in dem dadurch verstärkten Bereich des Deformationselementes erschweren.

4. Deformationselement nach Anspruch 3, **dadurch gekennzeichnet, dass** als Verstärkungsrippe mindestens eine longitudinal verlaufende Vertiefung vorgesehen ist.

5. Deformationselement nach Anspruch 3, **dadurch gekennzeichnet, dass** als Verstärkungsrippe mindestens eine transversale Vertiefung vorgesehen ist.

6. Deformationselement nach Anspruch 1, **dadurch gekennzeichnet, dass** es aus einem kaltverformbaren Material besteht, das beim Umformen eine Kaltverfestigung erfährt.

7. Deformationselement nach Anspruch 6, **dadurch gekennzeichnet, dass** es mittels des Innenhochdruck-Umformverfahrens hergestellt ist.

8. Deformationselement nach Anspruch 1, **dadurch gekennzeichnet, dass** es an mindestens einem Ende Verstärkungsteile (36) aufweist.

## Claims

1. A deformation element for dissipating energy between the bumper and side member of a motor vehicle in a controlled way by means of inelastic deformation in a pre-produced deformation region,
**characterised in**
**that** the element is a hollow tubular part bent at approximately right angles, into whose one angle arm there is formed at least one indentation (12, 30) which provides a corrugated or bellows-like region which, when the remaining part of the side member is subjected to an impact with a force component the in direction (y=0) extending perpendicularly to the indentation, produces a nominal kink in which said one angle arm can be folded, and that the deformation element is provided in one part.

2. A deformation element according to claim 1,
**characterised in**
**that** the at least one indentation (12, 30) is formed so as to be step-like so that, upon deformation, the upper region of the step slides into the lower region.

3. A deformation element according to claim 1,
**characterised in**
**that**, at least in some regions, it comprises reinforcing ribs which complicate inelastic deformation in the region of the deformation element which is thereby reinforced.

4. A deformation element according to claim 3,
**characterised in**
**that** the reinforcing rib is provided in the form of at least one longitudinally extending indentation.

5. A deformation element according to claim 3,
**characterised in**
**that** the reinforcing rib is provided in the form of at least one transversely extending indentation.

6. A deformation element according to claim 1,
**characterised in**
**that** it consists of a cold-deformable material which, while being deformed, undergoes strain-hardening.

7. A deformation element according to claim 6,
**characterised in**
**that** it is produced by the internal high-pressure deformation process.

8. A deformation element according to claim 1,
**characterised in**
**that**, at at least one end, it comprises reinforcing parts (36).

## Revendications

1. Élément de déformation destiné à la dissipation contrôlée d'énergie entre un pare-chocs et un longeron de véhicule par déformation inélastique dans une zone de déformation préfabriquée, **caractérisé en ce que** l'élément est une pièce creuse de forme tubulaire pliée de façon à former sensiblement un angle droit, dont une branche comporte au moins une gorge (12 ; 30) formant une zone de forme ondulée ou en soufflet qui sert, lors d'un choc sur l'autre longeron avec une composante dynamique dans la direction (y = 0) perpendiculaire à la gorge dans la direction de la déformation, d'emplacement de flambage théorique au niveau duquel cette branche de l'angle peut se plier, et **en ce que** l'élément de déformation est d'une seule pièce.

2. Élément de déformation selon la revendication 1, **caractérisé en ce que** ladite au moins une gorge (12 ; 30) est de type étagé, de sorte que la zone supérieure de l'étage s'enfonce dans la zone inférieure lors d'une déformation.

3. Élément de déformation selon la revendication 1, **caractérisé en ce qu'**il comporte au moins partiellement des nervures de renforcement qui rendent plus difficile une déformation inélastique dans la zone ainsi renforcée de l'élément de déformation.

4. Élément de déformation selon la revendication 3, **caractérisé en ce qu'**il est prévu au moins une gorge s'étendant longitudinalement comme nervure de renforcement.

5. Élément de déformation selon la revendication 3, **caractérisé en ce qu'**il est prévu au moins une gorge transversale comme nervure de renforcement.

6. Élément de déformation selon la revendication 1, **caractérisé en ce qu'**il est fabriqué à partir d'un matériau déformable à froid qui est soumis à un durcissement par écrouissage lors du formage.

7. Élément de déformation selon la revendication 6, **caractérisé en ce qu'**il est fabriqué par un procédé de formage à haute pression interne.

8. Élément de déformation selon la revendication 1, **caractérisé en ce qu'**il comporte des pièces de renforcement (36) à au moins une de ses extrémités.
